# EUROPEAN PATENT APPLICATION

(11) **EP 4 600 139 A1**
(43) Date of publication of application: **13.08.2025**
(21) Application number: 23906381.1
(22) Date of filing: 05.09.2023
(51) Int. Cl.: B63H 21/32, B01D 53/62, B01D 53/78, B01D 53/96, C01B 32/50

(54) **MARINE VESSEL**

(30) Priority: 23.12.2022 JP 2022206692
(71) Applicant: Mitsubishi Shipbuilding Co., Ltd., Tokyo 108-8015 (JP)
(72) Inventor: YANAGISAWA Hiroyuki, Yokohama-shi, Kanagawa 220-8401 (JP); UNSEKI Takashi, Yokohama-shi, Kanagawa 220-8401 (JP)
(74) Representative: Studio Torta S.p.A.
(86) International application number: PCT/JP2023/032357
(87) International publication number: WO 2024/135004

(57) **Abstract**

This marine vessel comprises: a hull; a combustion device that is provided to the hull and that combusts a fuel; a carbon dioxide recovery unit that is provided to the hull and that recovers, from an exhaust gas from the combustion device, carbon dioxide in the exhaust gas; and an air-blowing unit that blows the exhaust gas from the combustion device to the carbon dioxide recovery unit. The air-blowing unit comprises: a blower that blows the exhaust gas from the combustion device to the carbon dioxide recovery unit; and a flow rate adjusting unit that is provided to the inlet side of the blower and that adjusts the flow rate of the exhaust gas to be sent by the blower into the carbon dioxide recovery unit as a result of the opening angle of the flow rate adjusting unit being changed.

## Description

### Technical Field

The present disclosure relates to a ship.

This application claims priority to Japanese Patent Application No. 2022-206692, filed in Japan on December 23, 2022, the content of which is incorporated herein by reference.

### Background Art

PTL 1 discloses a recovery device including a separation device that separates carbon dioxide from an exhaust gas obtained by combusting a fuel (natural gas).

### Citation List

### Patent Literature

[PTL 1] Japanese Unexamined Patent Application Publication No. 2017-176954

### Summary of Invention

### Technical Problem

Meanwhile, in the land plant such as a power plant, there is little variation in the amount of exhaust gas generated by combustion of the fuel. For this reason, in the recovery device as in PTL 1 described above, for example, a pump for feeding a liquid such as water for cooling an absorption liquid used for separating carbon dioxide from an exhaust gas, a separation device, or the like is often operated at a substantially constant rotation speed.

In contrast, in a combustion device such as a main engine or a generator of a ship, a load greatly varies depending on an operation situation of the ship, weather, or the like. In this case, the amount of exhaust gas generated by the combustion device may also vary greatly depending on the situation. On the other hand, the recovery device is operated according to the maximum amount of the exhaust gas assumed in the combustion device. Therefore, for example, in a state where the load of the combustion device is small, there is a case where waste occurs in the energy required to operate the recovery device.

The present disclosure has been made to solve the above problems, and an object of the present disclosure is to provide a ship in which carbon dioxide recovery can be efficiently performed in accordance with an operating load of a combustion device. Solution to Problem

In order to solve the above problems, a ship according to the present disclosure includes a hull, a combustion device, a carbon dioxide recovery unit, and a blowing unit. The combustion device is provided in the hull and combusts fuel. The carbon dioxide recovery unit is provided in the hull. The carbon dioxide recovery unit recovers carbon dioxide in exhaust gas from the exhaust gas of the combustion device. The blowing unit sends the exhaust gas of the combustion device to the carbon dioxide recovery unit. The blowing unit includes a blower and a flow rate regulating unit. The blower blows the exhaust gas of the combustion device toward the carbon dioxide recovery unit. The flow rate regulating unit is provided on an inlet side of the blower. The flow rate regulating unit regulates a flow rate of the exhaust gas sent to the carbon dioxide recovery unit by the blower by changing an opening degree.

### Advantageous Effects of Invention

According to the ship of the present disclosure, it is possible to provide a ship in which carbon dioxide recovery can be efficiently performed in accordance with the operating load of the combustion device.

### Brief Description of Drawings

Fig. 1 is a side view of a ship according to an embodiment of the present disclosure.
Fig. 2 is a diagram showing a configuration of a carbon dioxide recovery unit of the ship according to the embodiment of the present disclosure.
Fig. 3 is a diagram showing a configuration of a flow rate regulating unit of the ship according to the embodiment of the present disclosure.
Fig. 4 is a diagram showing a hardware configuration of a control device of the ship according to the embodiment of the present disclosure.
Fig. 5 is a functional block diagram of the control device according to the embodiment of the present disclosure.

### Description of Embodiments

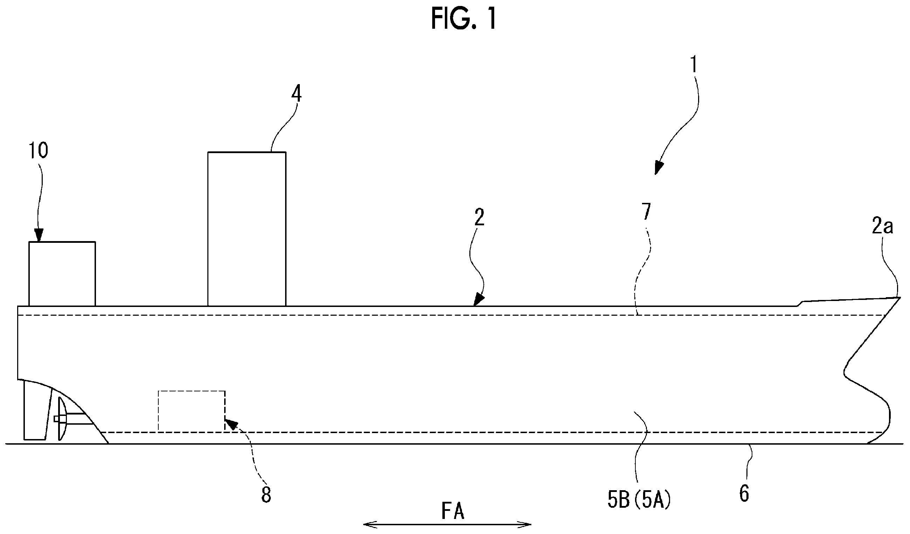

Hereinafter, a ship according to an embodiment of the present disclosure will be described with reference to Figs. 1 to 5.

### (Configuration of Ship)

As shown in Fig. 1, a ship 1 of the embodiment of the present disclosure includes at least a hull 2, a superstructure 4, a combustion device 8, and a carbon dioxide recovery unit 10. The ship type of the ship 1 of this embodiment is not limited to a specific ship type. As an example of the ship type of the ship 1, a liquefied gas carrier, a ferry, a roll-on/roil-off (RORO) ship, a car carrier, a passenger ship, or the like can be exemplified.

The hull 2 has a pair of broadsides 5A and 5B and a bottom 6 forming an outer shell. The broadsides 5A and 5B include a pair of broadside skins respectively forming right and left broadsides. The bottom 6 includes a bottom skin connecting the broadsides 5A and 5B. The outer shell of the hull 2 is U-shaped in a cross section perpendicular to a fore-aft direction FA by the pair of broadsides 5A and 5B and the bottom 6.

The hull 2 further includes an upper deck 7 that is a full-length deck which is disposed in an uppermost layer. The superstructure 4 is formed on the upper deck 7. An accommodation space and the like are provided inside the superstructure 4. In the ship 1 of this embodiment, for example, a cargo space (not shown) for loading cargo is provided on a fore 2a side in the fore-aft direction FA from the superstructure 4.

The combustion device 8 is a device that generates heat energy by combusting a fuel and is provided in the hull 2. Examples of the combustion device 8 include an internal combustion engine used in a main engine for propulsion of the ship 1, an internal combustion engine used in a power generation facility that supplies power into the ship, and a boiler that generates steam as a working fluid.

### (Configuration of Carbon Dioxide Recovery Unit)

The carbon dioxide recovery unit 10 recovers carbon dioxide in the exhaust gas of the combustion device 8. The carbon dioxide recovery unit 10 is provided in the hull 2. The carbon dioxide recovery unit 10 exemplified in the present embodiment is provided on the upper deck 7 of the hull 2. However, the carbon dioxide recovery unit 10 is not limited to being disposed on the upper deck 7.

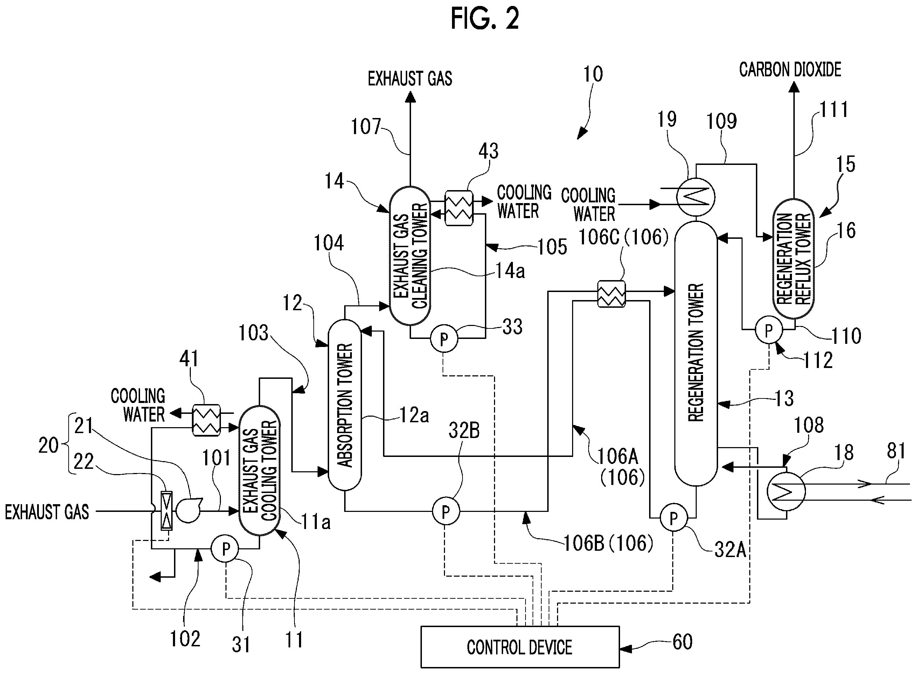

Fig. 2 is a diagram showing a configuration of a carbon dioxide recovery unit according to the embodiment of the present disclosure.

As shown in Fig. 2, the carbon dioxide recovery unit 10 includes an exhaust gas cooling tower 11, an absorption tower 12, a regeneration tower 13, an exhaust gas cleaning tower 14, a recovery unit 15, a blowing unit 20, and a control device 60.

The exhaust gas cooling tower 11 cools the exhaust gas of the combustion device 8 (refer to Fig. 1) with the water around the hull 2 on which the hull 2 floats or the fresh water stored in the fresh water tank (not shown) provided in the hull 2 as a liquid coolant (for example, cools to about 40°C). The exhaust gas cooling tower 11 may be provided as necessary, and may be omitted, for example, in a case where the temperature of the exhaust gas to be introduced into the absorption tower 12 is sufficiently lowered.

An exhaust gas introduction pipe 101 for feeding the exhaust gas of the combustion device 8 is connected to the lower portion of the exhaust gas cooling tower 11. The exhaust gas cooling tower 11 includes a tower main body 11a and a nozzle (not shown) that sprays a liquid coolant from an upper portion in the tower main body 11a.

A liquid coolant supply system 102 that circulates a liquid coolant is connected to the exhaust gas cooling tower 11. One end of the liquid coolant supply system 102 is connected to a bottom portion of the tower main body 11a. The other end of the liquid coolant supply system 102 is connected to a nozzle (not shown) in an upper portion of the tower main body 11a.

A liquid coolant supply pump 31 and a heat exchanger 41 are provided in the middle of the liquid coolant supply system 102. The liquid coolant supply pump 31 sucks the liquid coolant accumulated in the bottom portion of the tower main body 11a from the inside of the tower main body 11a and supplies the liquid coolant to the nozzle at the upper portion of the tower main body 11a. The liquid coolant supplied to the nozzle is sprayed from the nozzle into the tower main body 11a, and comes into contact with the exhaust gas sent into the tower main body 11a. In this manner, the exhaust gas is cooled, and the dust and the like contained in the exhaust gas are captured and washed away by the liquid coolant.

The heat exchanger 41 exchanges heat between cooling water supplied from the outside of the carbon dioxide recovery unit 10 and the liquid coolant flowing in the liquid coolant supply system 102. In other words, the heat exchanger 41 cools the liquid coolant flowing inside the liquid coolant supply system 102 with the cooling water supplied from the outside of the carbon dioxide recovery unit 10.

One end of the exhaust gas discharge pipe 103 is connected to the top portion of the tower main body 11a. The exhaust gas discharge pipe 103 cools the exhaust gas with the liquid coolant in the tower main body 11a and sends the exhaust gas, in which the dust and the like are washed away, to the absorption tower 12.

The absorption tower 12 absorbs the carbon dioxide contained in the exhaust gas into the absorption liquid. The absorption tower 12 includes a tower main body 12a and a nozzle (not shown) that sprays an absorption liquid from an upper portion in the tower main body 12a. The other end of the exhaust gas discharge pipe 103 is connected to the lower portion of the tower main body 12a. The exhaust gas that has passed through the exhaust gas cooling tower 11 through the exhaust gas discharge pipe 103 is sent into the tower main body 12a.

The absorption liquid is supplied from the regeneration tower 13 via a circulation system 106 to be described later. The absorption tower 12 causes to drop the absorption liquid from a nozzle in the tower main body 12a, for example, and causes the absorption liquid to come into contact with the exhaust gas introduced into the absorption tower 12, thereby absorbing the carbon dioxide contained in the exhaust gas into the absorption liquid. The absorption tower 12 absorbs the carbon dioxide contained in the exhaust gas into an absorption liquid, for example, by a chemical absorption method. In the present embodiment, monoethanolamine (MEA) is used as the absorption liquid for absorbing carbon dioxide by a chemical absorption method. As the absorption liquid, a liquid other than MEA can also be used.

The exhaust gas after the absorption of the carbon dioxide by the absorption liquid is introduced into the exhaust gas cleaning tower 14 through the gas discharge pipe 104 from the top portion of the tower main body 12a. The exhaust gas cleaning tower 14 washes away the absorption liquid contained in the exhaust gas that has come out of the absorption tower 12 by dropping the cleaning liquid from the upper portion in the exhaust gas cleaning tower 14. As the cleaning liquid in this embodiment, for example, water around the hull 2 on which the hull 2 floats or fresh water stored in a fresh water tank (not shown) provided in the hull 2 is used. The exhaust gas cleaning tower 14 includes a tower main body 14a and a nozzle (not shown) that sprays a cleaning liquid from an upper portion in the tower main body 14a.

A cleaning liquid supply system 105 that circulates the cleaning liquid is connected to the exhaust gas cleaning tower 14. One end of the cleaning liquid supply system 105 is connected to a bottom portion of the tower main body 14a. The other end of the cleaning liquid supply system 105 is connected to a nozzle (not shown) in the tower main body 14a in an upper portion of the tower main body 14a. A cleaning liquid supply pump 33 and a heat exchanger 43 are provided in the middle of the cleaning liquid supply system 105.

The cleaning liquid supply pump 33 sucks the cleaning liquid in the tower main body 14a from the bottom portion of the tower main body 14a and supplies the cleaning liquid to the nozzle at the upper portion of the tower main body 14a. The cleaning liquid supplied to the nozzle is sprayed from the nozzle into the tower main body 14a, and comes into contact with the exhaust gas sent into the tower main body 14a. In this manner, the absorption liquid contained in the exhaust gas is captured and washed away by the cleaning liquid.

The heat exchanger 43 exchanges heat between the cooling water supplied from the outside of the carbon dioxide recovery unit 10 and the cleaning liquid flowing in the cleaning liquid supply system 105. In other words, the heat exchanger 43 cools the cleaning liquid that circulates in the cleaning liquid supply system 105 by the cooling water supplied from the outside of the carbon dioxide recovery unit 10. Then, the cleaning liquid cooled by the heat exchanger 43 is sprayed into the tower main body 14a from the nozzle at the upper portion of the tower main body 14a.

One end of the exhaust pipe 107 is connected to the top portion of the tower main body 14a. The exhaust pipe 107 guides the exhaust gas that has come out of the exhaust gas cleaning tower 14, in other words, the exhaust gas from which the absorption liquid has been removed by the exhaust gas cleaning tower 14, to, for example, an exhaust funnel (not shown) or the like provided in the ship 1, and releases the exhaust gas to the atmosphere.

A circulation system 106 that circulates the absorption liquid between the absorption tower 12 and the regeneration tower 13 is provided between the absorption tower 12 and the regeneration tower 13 to be described later. The circulation system 106 includes an absorption liquid supply system 106A, an absorption liquid discharge system 106B, and a heat exchanger 106C.

One end of the absorption liquid supply system 106A is connected to a bottom portion of the tower main body 13a of the regeneration tower 13. The other end of the absorption liquid supply system 106A is connected to a nozzle (not shown) in the tower main body 12a in the upper portion of the tower main body 12a of the absorption tower 12. A first circulation pump 32A is provided in the middle of the absorption liquid supply system 106A. The first circulation pump 32A sucks the absorption liquid from the bottom portion of the tower main body 13a of the regeneration tower 13 through the absorption liquid supply system 106A and supplies the absorption liquid to the nozzle at the upper portion of the tower main body 12a of the absorption tower 12.

One end of the absorption liquid discharge system 106B is connected to a bottom portion of the tower main body 12a of the absorption tower 12. The other end of the absorption liquid discharge system 106B is connected to a nozzle (not shown) provided in the tower main body 13a in the upper portion of the tower main body 13a of the regeneration tower 13. A second circulation pump 32B is provided in the middle of the absorption liquid discharge system 106B. The second circulation pump 32B sucks the absorption liquid from the bottom portion of the tower main body 12a of the absorption tower 12 through the absorption liquid discharge system 106B and supplies the absorption liquid to the nozzle at the upper portion of the tower main body 13a of the regeneration tower 13.

The heat exchanger 106C exchanges heat between the absorption liquid flowing inside the absorption liquid supply system 106A and the absorption liquid flowing inside the absorption liquid discharge system 106B. In other words, the absorption liquid that has absorbed the carbon dioxide before being introduced into the regeneration tower 13 is heated by the heat of the absorption liquid immediately after the carbon dioxide is separated by the regeneration tower 13. The heat exchanger 106C may be omitted.

The regeneration tower 13 separates gaseous carbon dioxide from the absorption liquid in which the carbon dioxide is absorbed in the absorption tower 12. More specifically, the regeneration tower 13 heats the absorption liquid sent from the absorption tower 12 into the regeneration tower 13 via the absorption liquid discharge system 106B by the absorption liquid heating system 108.

The absorption liquid heating system 108 is connected to the regeneration tower 13. The absorption liquid heating system 108 circulates the absorption liquid between the regeneration tower 13 and the reboiler 18. That is, the absorption liquid heating system 108 supplies the absorption liquid taken out from the inside of the regeneration tower 13 to the reboiler 18 and returns the absorption liquid from the reboiler 18 to the inside of the regeneration tower 13. In other words, the reboiler 18 is provided in the middle of the absorption liquid heating system 108. A steam supply pipe 81 is connected to the reboiler 18, and steam generated by a boiler (not shown) or the like in the hull 2 is sent to the reboiler 18 by the steam supply pipe 81. The reboiler 18 exchanges heat between the steam sent through the steam supply pipe 81 and the absorption liquid flowing inside the absorption liquid heating system 108. That is, the reboiler 18 heats the absorption liquid with the heat of the steam.

The gaseous carbon dioxide is separated from the absorption liquid heated by the reboiler 18. Then, the absorption liquid and the gaseous carbon dioxide are returned into the tower main body 13a. The absorption liquid in which the gaseous carbon dioxide is separated and regenerated is returned to the absorption tower 12 through the absorption liquid supply system 106A and reused. On the other hand, the separated gaseous carbon dioxide is sent to the recovery unit 15 through the gaseous carbon dioxide exhaust line 109. A condenser 19 is provided in the middle of the gaseous carbon dioxide exhaust line 109. The condenser 19 condenses the moisture contained in the gaseous carbon dioxide by exchanging heat with cooling water supplied from the outside of the carbon dioxide recovery unit 10.

The recovery unit 15 recovers the gaseous carbon dioxide separated in the regeneration tower 13. The recovery unit 15 includes a regeneration reflux tower 16. The regeneration reflux tower 16 performs gas-liquid separation between the gaseous carbon dioxide sent after passing through the condenser 19 and the condensed water in which the moisture is condensed.

The condensed water that has been separated into gas and liquid is refluxed to the regeneration tower 13 from the bottom portion of the regeneration reflux tower 16 through the reflux line 110. A reflux pump 112 for refluxing the condensed water to the regeneration tower 13 is provided in the middle of the reflux line 110. On the other hand, the gaseous carbon dioxide from which the moisture is removed in the regeneration reflux tower 16 is discharged to the outside of the carbon dioxide recovery unit 10 through the carbon dioxide exhaust pipe 111. The gaseous carbon dioxide discharged through the carbon dioxide exhaust pipe 111 is stored, for example, in a carbon dioxide recovery tank (not shown) provided in the hull 2. At this time, the gaseous carbon dioxide may be liquefied by an appropriate carbon dioxide liquefaction device and stored in the carbon dioxide recovery tank.

In the carbon dioxide recovery unit 10, as described above, the exhaust gas discharged from the combustion device 8 is introduced into the absorption tower 12 after being cooled and washed away by the exhaust gas cooling tower 11. In the absorption tower 12, the carbon dioxide contained in the exhaust gas is absorbed by the absorption liquid. The exhaust gas from which the carbon dioxide is separated by the absorption liquid is washed in the exhaust gas cleaning tower 14 and then released into the atmosphere. In addition, the absorption liquid that has absorbed the carbon dioxide contained in the exhaust gas in the absorption tower 12 is sent to the regeneration tower 13 via the circulation system 106. The absorption liquid that has absorbed the carbon dioxide is heated by the reboiler 18 to increase the temperature, and the gaseous carbon dioxide contained in the absorption liquid is separated. The separated gaseous carbon dioxide is recovered through the regeneration reflux tower 16. On the other hand, the absorption liquid in which the carbon dioxide is separated in the regeneration tower 13 is circulated to the absorption tower 12 via the circulation system 106.

### (Configuration of Blowing Unit)

A blowing unit 20 is provided in the middle of the exhaust gas introduction pipe 101. The blowing unit 20 sends the exhaust gas of the combustion device 8 to the carbon dioxide recovery unit 10. In the present embodiment, a case where the blowing unit 20 sends the exhaust gas in the exhaust gas introduction pipe 101 to the exhaust gas cooling tower 11 is exemplified. The blowing unit 20 may be provided in the middle of the exhaust gas discharge pipe 103 between the exhaust gas cooling tower 11 and the absorption tower 12, or may be provided in both the middle of the exhaust gas introduction pipe 101 and the middle of the exhaust gas discharge pipe 103.

The blowing unit 20 includes a blower 21 and a flow rate regulating unit 22. The blower 21 blows the exhaust gas of the combustion device 8 toward the carbon dioxide recovery unit 10 through the exhaust gas introduction pipe 101. The flow rate regulating unit 22 is provided on the inflow port side of the blower 21. The flow rate regulating unit 22 is configured to be capable of regulating the flow rate of the exhaust gas flowing into the inflow port of the blower 21 by changing the opening degree thereof. In other words, the flow rate regulating unit 22 is capable of regulating the flow rate of the exhaust gas sent to the carbon dioxide recovery unit 10 by the blower 21.

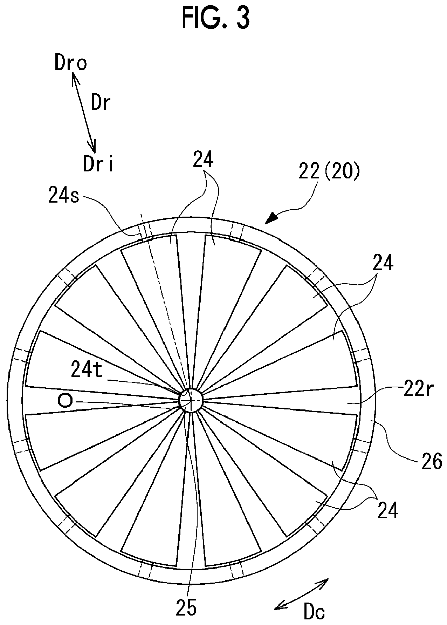

Fig. 3 is a diagram showing a configuration of a flow rate regulating unit of the ship according to the embodiment of the present disclosure.

As shown in Fig. 3, the flow rate regulating unit 22 of the present embodiment is a so-called inlet guide vane (IGV), and includes a plurality of movable vanes 24. The plurality of movable vanes 24 are provided between the center hub 25 and the frame 26. The center hub 25 extends along an axis O extending in the extending direction of the exhaust gas introduction pipe 101. The frame 26 is provided on the outer side Dro in the radial direction Dr around the axis O with respect to the center hub 25. The frame 26 has an annular shape when viewed from the direction of the axis O. The frame 26 may be continuous with, for example, an inflow port of the blower 21.

The plurality of movable vanes 24 are disposed on the inner side Dri in the radial direction Dr with respect to the frame 26. The plurality of movable vanes 24 are disposed at equal intervals in the circumferential direction Dc around the axis O. Each of the movable vanes 24 is supported by the center hub 25 and the frame 26 via shaft portions 24s and 24t extending in the radial direction Dr, and is rotatable around the shaft portions 24s and 24t. The plurality of movable vanes 24 are rotationally driven around the shaft portions 24s and 24t by a vane drive source (not shown) such as a motor. The flow rate regulating unit 22 adjusts the opening degree of the exhaust gas flow path 22r on the inner side in the radial direction Dr from the frame 26 by rotating the plurality of movable vanes 24 around the shaft portions 24s and 24t.

The control device 60 controls the operation of the flow rate regulating unit 22 based on the flow rate of the exhaust gas of the combustion device 8. The control device 60 adjusts the opening degree of the plurality of movable vanes 24 of the flow rate regulating unit 22 based on the flow rate of the exhaust gas of the combustion device 8. That is, when the flow rate of the exhaust gas of the combustion device 8 is large, the control device 60 increases the opening degree of the flow rate regulating unit 22, and when the flow rate of the exhaust gas of the combustion device 8 is small, the control device 60 decreases the opening degree of the flow rate regulating unit 22.

### (Hardware Configuration Diagram)

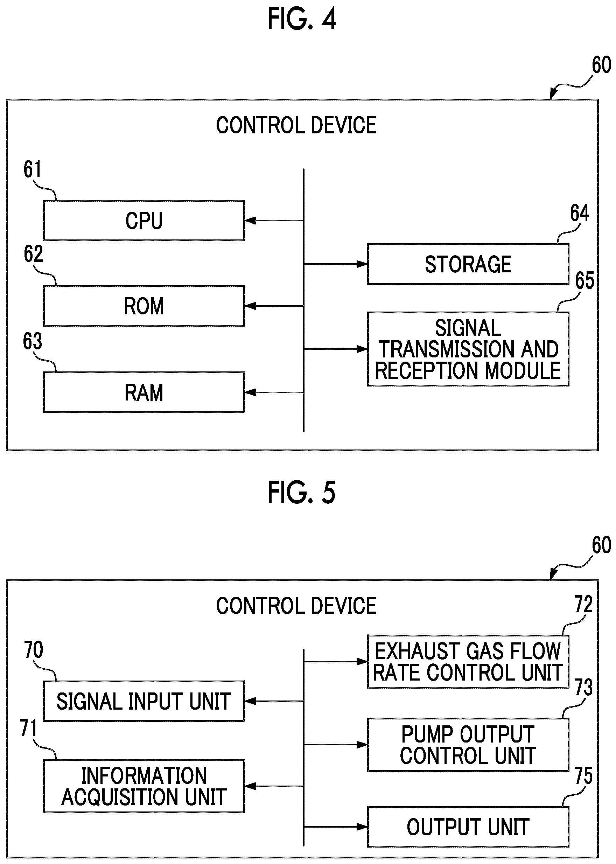

Fig. 4 is a diagram showing a hardware configuration of the control device of the carbon dioxide recovery unit according to the embodiment of the present disclosure.

As shown in Fig. 4, the control device 60 is a computer including a central processing unit (CPU) 61, a read only memory (ROM) 62, a random access memory (RAM) 63, a storage 64, and a signal transmission and reception module 65. The signal transmission and reception module 65 receives a signal related to the flow rate of the exhaust gas of the combustion device 8.

### (Functional Block Diagram)

Fig. 5 is a functional block diagram of the control device according to the embodiment of the present disclosure.

As shown in Fig. 5, the CPU 61 of the control device 60 realizes each of the configurations of the signal input unit 70, the information acquisition unit 71, the exhaust gas flow rate control unit 72, the pump output control unit 73, and the output unit 75 by executing a program stored in advance in a storage device such as the ROM 62 or the storage 64.

The signal input unit 70 receives a signal related to the flow rate of the exhaust gas of the combustion device 8 via the signal transmission and reception module 65, which is hardware. Examples of the signal related to the flow rate of the exhaust gas of the combustion device 8 include a signal indicating the load of the combustion device 8 and a signal indicating the flow rate of the fuel supplied to the combustion device 8. In addition, in a case where the combustion device 8 includes a supercharger (not shown), a signal indicating a rotation speed of the supercharger can be exemplified as a signal related to the flow rate of the exhaust gas of the combustion device 8. In addition, in a large ship, the diameter of a pipe through which exhaust gas flows is generally very large, and thus, in many cases, it is difficult to directly measure the flow rate of the exhaust gas using a flow meter or the like.

The information acquisition unit 71 acquires information related to the flow rate of the exhaust gas of the combustion device 8 based on the signal received by the signal input unit 70. Specifically, the information acquisition unit 71 of this embodiment acquires, as information related to the flow rate of the exhaust gas of the combustion device 8, for example, information indicating a ratio of the flow rate of the exhaust gas of the combustion device 8 at that time to the maximum flow rate of the exhaust gas that is assumed.

The exhaust gas flow rate control unit 72 controls the opening degree of the flow rate regulating unit 22 by rotating the plurality of movable vanes 24 based on information related to the flow rate of the exhaust gas of the combustion device 8. The exhaust gas flow rate control unit 72 controls the plurality of movable vanes 24 to increase or decrease the opening degree of the flow rate regulating unit 22 according to the flow rate of the exhaust gas of the combustion device 8. The exhaust gas flow rate control unit 72 may adjust the opening degree of the flow rate regulating unit 22 in multiple stages, based on table information, map information, or the like set in advance in association with the flow rate of the exhaust gas of the combustion device 8, when controlling the plurality of movable vanes 24 to increase or decrease the opening degree of the flow rate regulating unit 22 according to the flow rate of the exhaust gas of the combustion device 8.

In addition to the control of the exhaust gas flow rate, a flow rate control function of various pumps of the carbon dioxide recovery device may be added as follows.

The pump output control unit 73 controls the output of each of the liquid coolant supply pump 31, the first circulation pump 32A, the second circulation pump 32B, and the cleaning liquid supply pump 33, based on information related to the flow rate of the exhaust gas of the combustion device 8. The pump output control unit 73 controls the outputs of the liquid coolant supply pump 31, the first circulation pump 32A, the second circulation pump 32B, the cleaning liquid supply pump 33, and the reflux pump 112 in conjunction with the opening degree of the flow rate regulating unit 22. The liquid coolant supply pump 31, the first circulation pump 32A, the second circulation pump 32B, the cleaning liquid supply pump 33, and the reflux pump 112 which are exemplified in the present embodiment are electric pumps. The pump output control unit 73 controls the output of each of the liquid coolant supply pump 31, the first circulation pump 32A, the second circulation pump 32B, the cleaning liquid supply pump 33, and the reflux pump 112 by controlling the rotation speed of a motor (not shown) that drives each of the liquid coolant supply pump 31, the first circulation pump 32A, the second circulation pump 32B, the cleaning liquid supply pump 33, and the reflux pump 112 by inverter control. Information related to the flow rate of the exhaust gas also includes the carbon dioxide concentration, the temperature, the pressure, and the like of various fluids, which change according to the flow rate.

The pump output control unit 73 of the present embodiment performs so-called inverter control of increasing or decreasing a current supplied to each of the motors of the liquid coolant supply pump 31, the first circulation pump 32A, the second circulation pump 32B, the cleaning liquid supply pump 33, and the reflux pump 112 by an inverter (not shown) to control the rotation speed of each motor. Examples of a control method for the inverter include pulse width modulation (PWM) control or the like. As a method for adjusting the outputs of the liquid coolant supply pump 31, the first circulation pump 32A, the second circulation pump 32B, the cleaning liquid supply pump 33, and the reflux pump 112 according to the opening degree of the flow rate regulating unit 22, for example, a method for linearly or stepwise adjusting according to the opening degree of the flow rate regulating unit 22 is given. In the pump output control unit 73, when controlling the outputs of the liquid coolant supply pump 31, the first circulation pump 32A, the second circulation pump 32B, the cleaning liquid supply pump 33, and the reflux pump 112 according to the opening degree of the flow rate regulating unit 22, the control may be performed based on table information, map information, or the like of the opening degree of the flow rate regulating unit 22 and the outputs of the respective pumps created in advance based on simulation, experiment, or the like.

The output unit 75 outputs a control signal for changing the opening degree of the plurality of movable vanes 24 of the flow rate regulating unit 22, based on the control of the exhaust gas flow rate control unit 72. Specifically, the output unit 75 outputs a control signal for changing the outputs of the liquid coolant supply pump 31, the first circulation pump 32A, the second circulation pump 32B, the cleaning liquid supply pump 33, and the reflux pump 112, based on the control of the pump output control unit 73.

### (Operations and Effects)

In the ship 1 of the above-described embodiment, the exhaust gas of the combustion device 8 is blown to the carbon dioxide recovery unit 10 by the blowing unit 20. Since the blowing unit 20 includes the flow rate regulating unit 22 capable of changing the opening degree on the inlet side of the blower 21, the flow rate of the exhaust gas sent to the carbon dioxide recovery unit 10 via the blower 21 can be regulated by changing the opening degree of the flow rate regulating unit 22. Therefore, the opening degree of the flow rate regulating unit 22 is changed according to the flow rate of the exhaust gas of the combustion device 8, and thus the flow rate of the exhaust gas sent to the carbon dioxide recovery unit 10 can be appropriately regulated.

Further, as described above, it is also possible to add a function of adjusting the outputs of the liquid coolant supply pump 31, the first circulation pump 32A, the second circulation pump 32B, the cleaning liquid supply pump 33, and the reflux pump 112 according to the amount of the exhaust gas sent to the carbon dioxide recovery unit 10, and when the function is added, it is not necessary to continue the operation prepared for the excessive flow rate of the exhaust gas in the carbon dioxide recovery unit 10, and further, energy consumption can be reduced. Therefore, the carbon dioxide recovery unit 10 can be efficiently operated.

In addition, in the above-described embodiment, the flow rate regulating unit 22 changes the opening degree by rotating the plurality of movable vanes 24 around the shaft portions 24s and 24t, and regulates the flow rate of the exhaust gas sent to the carbon dioxide recovery unit 10 by the blower 21. Therefore, it is possible to reduce the pressure loss caused by the flow rate regulating unit 22 while improving the followability and control accuracy when regulating the change in the flow rate of the exhaust gas sent to the carbon dioxide recovery unit 10 by the blower 21.

Further, in the above-described embodiment, the control device 60 controls the operation of the flow rate regulating unit 22 based on the flow rate of the exhaust gas of the combustion device 8. Therefore, the carbon dioxide recovery unit 10 can be automatically operated and can be efficiently operated.

In addition, in the above-described embodiment, the operation of the flow rate regulating unit 22 is controlled based on the information related to the load of the combustion device 8 acquired by the information acquisition unit 71, and the flow rate of the exhaust gas sent to the carbon dioxide recovery unit 10 by the blower 21 is regulated. Therefore, even in a case where the flow rate of the exhaust gas cannot be directly measured as in the case of the large ship 1, the flow rate regulating unit 22 is controlled to have an opening degree corresponding to the flow rate of the exhaust gas, and thus the operation of the carbon dioxide recovery unit 10 including the absorption tower 12, the regeneration tower 13, and the recovery unit 15 can be efficiently performed.

### (Modification Example of Embodiment)

In the above-described embodiment, the exhaust gas flow rate control unit 72 of the control device 60 regulates the flow rate of the exhaust gas sent to the carbon dioxide recovery unit 10 based on information related to the flow rate of the exhaust gas of the combustion device 8 by the flow rate regulating unit 22. However, the present disclosure is not limited to this configuration.

For example, the control device 60 may regulate the flow rate of the exhaust gas sent to the carbon dioxide recovery unit 10 based on a required value of the carbon dioxide recovery capacity in the carbon dioxide recovery unit 10 in addition to the information related to the flow rate of the exhaust gas. Here, the required value of the carbon dioxide recovery capacity in the carbon dioxide recovery unit 10 is, for example, a required value of the ratio of the carbon dioxide recovered from the exhaust gas in the carbon dioxide recovery unit 10.

As an initiative to reduce greenhouse gas (GHG), the International Maritime Organization (IMO) has developed a carbon intensity index (CII) as a rating of fuel consumption performance in ships. In this CII, the rating (rank) of the fuel consumption performance is set in multiple stages based on the amount of carbon dioxide emission per transport capacity. The rating of the fuel consumption performance is set to become sequentially stricter with the passage of a predetermined period.

The required value of the carbon dioxide recovery capacity can be set according to the rating of the fuel consumption performance. In this case, the control device 60 may set the required value of the carbon dioxide recovery capacity in the carbon dioxide recovery unit 10 in accordance with the rating of the fuel consumption performance as the target at that time. In addition, for example, in a case where the rating (rank) of the fuel consumption performance is continuously maintained, the required value of the carbon dioxide recovery capacity may be set such that the carbon dioxide emission is sequentially reduced every predetermined period.

In such a configuration, since the flow rate of the exhaust gas sent to the carbon dioxide recovery unit 10 by the blowing unit 20 can be regulated based on the required value of the carbon dioxide recovery capacity in the carbon dioxide recovery unit 10, it is possible to suppress the operation in a state where the carbon dioxide recovery capacity in the carbon dioxide recovery unit 10 is excessive, and it is possible to further suppress energy consumption.

### (Other Embodiments)

Above, the embodiment of the present disclosure has been described in detail with reference to the drawings, but the specific configuration is not limited to the embodiment, and includes design changes and the like within a scope not departing from the concept of the present disclosure.

In the above-described embodiment, the flow rate of the exhaust gas sent to the carbon dioxide recovery unit 10 by the blower 21 is regulated by adjusting the opening degree of the flow rate regulating unit 22. However, the present disclosure is not limited thereto.

For example, in addition to the flow rate regulation by the flow rate regulating unit 22, the flow rate regulation by the blower 21 may be performed.

In this case, the exhaust gas flow rate control unit 72 may control the rotation speed of the motor (not shown) that drives the blower 21 by inverter control. As the control method of the blower 21 by the exhaust gas flow rate control unit 72, inverter control can be exemplified as in each pump of the carbon dioxide recovery unit 10 described above. In this way, when the flow rate of the exhaust gas decreases, the rotation speed of the blower 21 can be reduced in accordance with the decrease in the exhaust gas flow rate to reduce energy consumption while ensuring the followability to the change in the flow rate of the exhaust gas by the flow rate regulating unit 22.

Further, in the above-described embodiment, the flow rate regulating unit 22 includes the plurality of movable vanes 24. However, the flow rate regulating unit 22 is not limited to this configuration. The flow rate regulating unit 22 may be configured to regulate the flow rate of the exhaust gas to be sent to the carbon dioxide recovery unit 10, and may use another flow regulation valve such as a butterfly valve. In this case, although the followability and control accuracy are lower than in the configuration including the plurality of movable vanes 24, the opening degree of the flow rate regulating unit 22 is changed according to the flow rate of the exhaust gas of the combustion device 8, as in the configuration including the plurality of movable vanes 24, and thus the flow rate of the exhaust gas sent to the carbon dioxide recovery unit 10 can be appropriately regulated.

### <Additional Notes>

The ship 1 described in the embodiment is understood, for example, as follows.
(1) A ship 1 according to a first aspect includes a hull 2, a combustion device 8 that is provided in the hull 2 and combusts fuel, a carbon dioxide recovery unit 10 that is provided in the hull 2 and recovers carbon dioxide in exhaust gas from the combustion device 8, and a blowing unit 20 that sends the exhaust gas of the combustion device 8 to the carbon dioxide recovery unit 10, in which the blowing unit 20 includes a blower 21 that blows the exhaust gas of the combustion device 8 toward the carbon dioxide recovery unit 10, and a flow rate regulating unit 22 that is provided on an inlet side of the blower 21 and regulates a flow rate of the exhaust gas sent to the carbon dioxide recovery unit 10 by the blower 21 by changing an opening degree.
   The carbon dioxide in the exhaust gas generated by combusting the fuel in the combustion device 8 is recovered by the carbon dioxide recovery unit 10. The blowing unit 20 blows the exhaust gas of the combustion device 8 toward the carbon dioxide recovery unit by the blower 21. A flow rate regulating unit 22 is provided on an inlet side of the blower 21. In the flow rate regulating unit 22, the flow rate of the exhaust gas sent to the carbon dioxide recovery unit 10 by the blower 21 can be regulated by changing the opening degree. Therefore, the flow rate of the exhaust gas sent to the carbon dioxide recovery unit 10 can be appropriately regulated by changing the opening degree of the flow rate regulating unit 22 according to the amount of the exhaust gas of the combustion device 8. Therefore, it is not necessary to operate the carbon dioxide recovery unit 10 in preparation for the exhaust gas having an excessive flow rate, and energy consumption can be reduced. As a result, the carbon dioxide recovery unit 10 can be efficiently operated.
(2) The ship 1 according to a second aspect is the ship 1 of (1), in which the flow rate regulating unit 22 includes a center hub 25 extending in a direction of an axis O, and a plurality of movable vanes 24 disposed at intervals in a circumferential direction Dc around the axis O with respect to the center hub 25 on an outer side Dro in a radial direction Dr around the axis O, and rotatable around shaft portions 24s and 24t extending in the radial direction Dr.
   Accordingly, in the flow rate regulating unit 22, the opening degree is changed by rotating the plurality of movable vanes 24 around the shaft portions 24s and 24t, and thus the flow rate of the exhaust gas sent to the carbon dioxide recovery unit 10 by the blower 21 can be regulated. In addition, by adopting a method in which the flow rate regulating unit 22 rotates the plurality of movable vanes 24 around the shaft portions 24s and 24t, it is possible to improve the followability and control accuracy with respect to a change in the exhaust gas flow rate and to reduce pressure loss.
(3) The ship 1 according to a third aspect is the ship 1 of (1) or (2), further includes a control device 60 that controls an operation of the flow rate regulating unit 22 based on a flow rate of the exhaust gas of the combustion device 8.
   Accordingly, the control device 60 can control the operation of the flow rate regulating unit 22 based on the flow rate of the exhaust gas of the combustion device 8, and thus the carbon dioxide recovery unit 10 can be efficiently operated and can be automatically operated.
(4) The ship 1 according to a fourth aspect is the ship 1 of (3), in which the control device 60 controls a rotation speed of the blower 21.
   In this way, by controlling the rotation speed of the blower 21, the flow rate of the exhaust gas sent to the carbon dioxide recovery unit 10 by the blower 21 can also be regulated. Therefore, energy consumption by the blower 21 can be reduced.
(5) The ship 1 according to a fifth aspect is the ship 1 of (3), in which the carbon dioxide recovery unit 10 includes an absorption tower 12 into which the exhaust gas of the combustion device 8 and an absorption liquid capable of absorbing carbon dioxide in the exhaust gas are introduced, and which absorbs the carbon dioxide in the exhaust gas by the absorption liquid, a regeneration tower 13 that heats the absorption liquid that has absorbed the carbon dioxide to separate the carbon dioxide from the absorption liquid, and a recovery unit 15 that recovers the carbon dioxide separated in the regeneration tower 13, and the control device 60 further includes an information acquisition unit 71 that acquires information related to a load of the combustion device 8, and controls an operation of the flow rate regulating unit 22 to regulate the flow rate of the exhaust gas sent to the carbon dioxide recovery unit 10 by the blower 21, based on the information related to the load of the combustion device 8 acquired by the information acquisition unit 71.

Examples of the information related to the load of the combustion device 8 include the load of the combustion device 8, the fuel consumption in the combustion device 8, and the rotation speed of the supercharger in a case where the combustion device 8 is provided with the supercharger.

In such a configuration, the operation of the flow rate regulating unit 22 is controlled based on the information related to the load of the combustion device 8 acquired by the information acquisition unit 71, and the flow rate of the exhaust gas sent to the carbon dioxide recovery unit 10 by the blower 21 is regulated. In this manner, the operation of the carbon dioxide recovery unit 10 including the absorption tower 12, the regeneration tower 13, and the recovery unit 15 can be efficiently performed.

(6) The ship 1 according to a sixth aspect is the ship 1 of any one of (3) to (5), in which the control device 60 regulates the flow rate of the exhaust gas sent to the carbon dioxide recovery unit 10 by the flow rate regulating unit 22 based on a required value of q recovery capacity of the carbon dioxide in the carbon dioxide recovery unit 10.

In such a configuration, the control device 60 regulates the flow rate of the exhaust gas sent to the carbon dioxide recovery unit 10 by the flow rate regulating unit 22 based on the required value of the carbon dioxide recovery capacity in the carbon dioxide recovery unit 10. In this manner, the flow rate of the exhaust gas sent to the carbon dioxide recovery unit 10 can be regulated based on the required value of the carbon dioxide recovery capacity set on the carbon dioxide recovery unit 10 side as well as the amount of the exhaust gas of the combustion device 8. Therefore, it is possible to suppress the operation of the carbon dioxide recovery unit 10 with excessive carbon dioxide recovery capacity and to suppress energy consumption of the carbon dioxide recovery unit 10.

### Industrial Applicability

According to the ship of the present disclosure, it is possible to provide a ship in which carbon dioxide recovery can be efficiently performed in accordance with the operating load of the combustion device.

### Reference Signs List

1: ship
2: hull
2a: fore
4: superstructure
5A, 5B: broadside
6: bottom
7: upper deck
8: combustion device
10: carbon dioxide recovery unit
11: exhaust gas cooling tower
11a: tower main body
12: absorption tower
12a: tower main body
13: regeneration tower
13a: tower main body
14: exhaust gas cleaning tower
14a: tower main body
15: recovery unit
16: regeneration reflux tower
18: reboiler
19: condenser
20: blowing unit
21: blower
22: flow rate regulating unit
22r: exhaust gas flow path
24: movable vane
24s, 24t: shaft portion
25: center hub
26: frame
31: liquid coolant supply pump
32A: first circulation pump
32B: second circulation pump
33: cleaning liquid supply pump
41, 43: heat exchanger
60: control device
61: CPU
62: ROM
63: RAM
64: storage
65: signal transmission and reception module
70: signal input unit
71: information acquisition unit
72: exhaust gas flow rate control unit
73: pump output control unit
75: output unit
81: steam supply pipe
101: exhaust gas introduction pipe
102: liquid coolant supply system
103: exhaust gas discharge pipe
104: gas discharge pipe
105: cleaning liquid supply system
106: circulation system
106A: absorption liquid supply system
106B: absorption liquid discharge system
106C: heat exchanger
107: exhaust pipe
108: absorption liquid heating system
109: gaseous carbon dioxide exhaust line
110: reflux line
111: carbon dioxide exhaust pipe
112: reflux pump
Dc: circumferential direction
Dr: radial direction
Dri: inner side
Dro: outer side
FA: fore-aft direction
O: axis

## Claims

1. A ship comprising:
a hull;
a combustion device that is provided in the hull and combusts fuel;
a carbon dioxide recovery unit that is provided in the hull and recovers carbon dioxide in exhaust gas from the combustion device; and
a blowing unit that sends the exhaust gas of the combustion device to the carbon dioxide recovery unit,
wherein the blowing unit includes
a blower that blows the exhaust gas of the combustion device toward the carbon dioxide recovery unit, and
a flow rate regulating unit that is provided on an inlet side of the blower and regulates a flow rate of the exhaust gas sent to the carbon dioxide recovery unit by the blower by changing an opening degree.

2. The ship according to claim 1,
wherein the flow rate regulating unit includes
a center hub extending in a direction of an axis, and
a plurality of movable vanes disposed at intervals in a circumferential direction around the axis with respect to the center hub on an outer side in a radial direction around the axis, and rotatable around a shaft portion extending in the radial direction.

3. The ship according to claim 1 or 2, further comprising:
a control device that controls an operation of the flow rate regulating unit based on a flow rate of the exhaust gas of the combustion device.

4. The ship according to claim 3,
wherein the control device controls a rotation speed of the blower.

5. The ship according to claim 3,
wherein the carbon dioxide recovery unit includes
an absorption tower into which the exhaust gas of the combustion device and an absorption liquid capable of absorbing carbon dioxide in the exhaust gas are introduced, and which absorbs the carbon dioxide in the exhaust gas by the absorption liquid,
a regeneration tower that heats the absorption liquid that has absorbed the carbon dioxide to separate the carbon dioxide from the absorption liquid, and
a recovery unit that recovers the carbon dioxide separated in the regeneration tower, and
the control device
further includes an information acquisition unit that acquires information related to a load of the combustion device, and
controls an operation of the flow rate regulating unit to regulate the flow rate of the exhaust gas sent to the carbon dioxide recovery unit by the blower, based on the information related to the load of the combustion device acquired by the information acquisition unit.

6. The ship according to claim 3,
wherein the control device regulates the flow rate of the exhaust gas sent to the carbon dioxide recovery unit by the flow rate regulating unit based on a required value of a recovery capacity of the carbon dioxide in the carbon dioxide recovery unit.
